# EUROPÄISCHE PATENTSCHRIFT

(11) **EP 3 577 452 B1**
(45) Veröffentlichungstag und Bekanntmachung des Hinweises auf die Patenterteilung: **18.08.2021**
(21) Anmeldenummer: 17784278.8
(22) Anmeldetag: 13.10.2017
(51) Int. Cl.: G01N 30/60, G01N 30/54

(54) **TRAGBARE GASANALYSEVORRICHTUNG MIT KOMPAKTER MESSEINRICHTUNG**
PORTABLE GAS ANALYSIS DEVICE WITH COMPACT MEASUREMENT DEVICE
DISPOSITIF D'ANALYSE DE GAZ PORTATIF POURVU D'UN DISPOSITIF DE MESURE COMPACT

(30) Priorität: 02.02.2017 DE 102017201677
(43) Veröffentlichungstag der Anmeldung: 11.12.2019
(73) Patentinhaber: Bentekk GmbH, 21073 Hamburg (DE)
(72) Erfinder: SCHMITTMANN, Matthias, 20146 Hamburg (DE); WEBER, Johannes, 20099 Hamburg (DE); WEBER, Paul, 13357 Berlin (DE); JÜNEMANN, Arne, 21075 Hamburg (DE)
(74) Vertreter: Glawe, Delfs, Moll
(86) Internationale Anmeldenummer: PCT/EP2017/076235
(87) Internationale Veröffentlichungsnummer: WO 2018/141426

(56) Entgegenhaltungen:
- EP-A1- 0 035 983
- EP-A1- 0 552 529
- WO-A1-2009/149541
- US-A- 5 856 616
- US-A- 5 983 703
- US-A1- 2006 283 324

## Beschreibung

Die Erfindung betrifft eine tragbare Gasanalysevorrichtung mit einer Messeinrichtung umfassend eine Trennsäule und einen Detektor.

Gaschromatographie ist ein etabliertes Messverfahren, um die chemische Zusammensetzung und Konzentration von flüchtigen Stoffen zu bestimmen. In dem Verfahren wird ein Gasgemisch in eine Säule injiziert, in der ein Druckgefälle und damit Gasfluss zum Ende hin besteht, wobei jeder Stoff mit eigener Geschwindigkeit in der Säule propagiert und nach einer bestimmten Retentionszeit das Ende der Säule erreicht. Mit einem geeigneten Detektor wird ein Signal für Intensität nach Retentionszeit aufgetragen, das sogenannte Chromatogramm. In diesem Chromatogramm hat jeder Stoff charakteristische Spitzen (sog. Peaks), anhand derer dieser Stoff identifiziert und die Konzentration bestimmt werden kann. Für eine erfolgreiche Messung ist es notwendig, dass diese Peaks ausreichend klar erkennbar und voneinander getrennt sind. Das Chromatogramm hängt von vielen Faktoren ab, darunter Art, Länge und Temperatur der Säule sowie Druckgefälle. Eine längere Säule (oder seriell angeordnete) streckt das Chromatogramm und trennt die Peaks besser, verlängert aber den Messprozess. Parallel angeordnete Säulen (oder Säulen mit größerem Innendurchmesser) verbessern den Durchsatz und erhöhen das Signal am Detektor, wodurch geringere Konzentrationen gemessen werden können. Bei höheren Temperaturen und Drücken beschleunigt sich das Verfahren, wobei es jeweils eine Grenze der Belastung für die Säule und auch der Leistungsfähigkeit von Heizung und Gebläsen gibt. Ungleichmäßige Temperaturen im Verlauf der Säule oder schwankende Temperaturen und Drücke im Verlauf der Messung verzerren das Messergebnis und erschweren den Vergleich von verschiedenen Messungen.

Bekannt sind stationäre Laborgeräte, die üblicherweise mit sehr langen Chromatographie-Säulen (>10m) ausgeführt sind und in aufwendig kontrollierten äußeren Bedingungen betrieben werden. Das Gerät wird dabei vorgeheizt, kalibriert und gespült. Eine Messung erfolgt also erst nach einem längeren Prozess der Vorbereitung, während dem sich alle Bedingungen stabilisieren. Auch sind viele Labore klimatisiert, weshalb sich ein Laborgerät nur einer kleinen Spanne von äußeren Temperaturen anpassen muss. Die Stromversorgung am Netz erlaubt es, ineffizient zu heizen. Entsprechend können Laborgeräte mit hoher Sensitivität, Selektivität und Präzision Gase messen. Außerhalb eines Labors sind sie kaum einsetzbar. Für eine portable Verwendung sind sie ungeeignet.

Zur universelleren und einfacheren, ggf. auch portablen, Verwendung sind miniaturisierte Gaschromatographen entwickelt worden, die entweder als portable Geräte ausgeführt sind oder bestimmte Spezifikationen zu Größe oder Kosten erfüllen sollen. Im Vergleich zu Laborgeräten stellen diese miniaturisierten Gaschromatographen einen Kompromiss zwischen Leistungsfähigkeit der Messung und Abmessungen dar. Für eine bestimmte Anwendung muss eine ausreichende Sensitivität für eine vorgegebene Konzentration eines Stoffes erreicht werden und eine Selektivität zwischen den zu erwartenden Stoffen bestehen. Viele der miniaturisierten Gaschromatographen sind eng an einer Spezifikation entwickelt, etwa als portables Gerät in der Umwelttechnik, als Messgerät für Spuren gesundheitsschädlicher Verbindungen in der Arbeitssicherheit oder als Installation in einem Mess-Fahrzeug. In vielen dieser Anwendungen muss das Gerät auch bei extremen Außentemperaturen funktionieren, wird nur über eine Batterie mit Strom versorgt und ist Belastungen durch Erschütterung und Stöße ausgesetzt. Die kompakteste Geräteklasse für miniaturisierte Gaschromatographen sind solche, die von einer Person dauerhaft in der Hand getragen oder am Körper geführt werden können. Zum Gewicht der Baugruppe für die Gaschromatographie im engeren Sinn addiert sich das Gewicht von elektronischen Steuereinheiten, Energiespeichern und Gehäusen.

Vorgeschlagen wurde von der Anmelderin ein portabler Gaschromatograph (Anmeldeaktenzeichen DE 10 2015 219 838), der bei einem Volumen von etwa einem Liter ungefähr ein Kilogramm wiegt. Dieses Gerät ist mit einigem Abstand der kompakteste und leichteste mobile Gaschromatograph (vollständig funktionsfähiges Gasanalysegerät) auf dem Markt. In diesem Gerät sind die Bauteile wie Gebläse, Filter, verschiedene elektronische Steuereinheiten, ein Akkumulator und die verschiedenen Komponenten des Gaschromatographen im engeren Sinne (Injektionseinheit, Säule als Multikapillare, Detektoreinheit) so angeordnet, dass sie effizient den vorhandenen Platz nutzen. Das Gerät ist vorgesehen zur Anwendung insbesondere in der Arbeitssicherheit und bei Rettungskräften wie Werkfeuerwehren.

Eine portable Gasanalysevorrichtung mit einem Gasmesspfad, der eine Trennsäule mit einem Detektor als Messeinrichtung umfasst, ist bekannt aus der US 5 983 703 A. Die Trennsäule weist eine Multi-Kapillare auf, für die eine zweiteilige Einhausung aus wärmeleitendem Material bestehend aus Bodenplatte und einem Oberteil vorgesehen ist, wobei das Oberteil nicht voll umschließend sondern nach oben offen ist. Ein abgesetzt montiertes, nämlich im Inneren eines Ventilblocks angeordnetes Heizelement erwärmt diesen von innen, wobei die Einhausung nur indirekt beheizt wird. Es entsteht so ein Temperaturgefälle nach außen zur Einhausung. Ein Heizelement an der Einhausung ist nicht vorgesehen. Eine weitere portable Gasanalysevorrichtung verbesserter Bauart ist aus der US 5,856,616 A bekannt. Für die Trennsäule ist eine Verschalung aus wärmeleitendem Material mit einer thermischen Stabilisierungseinrichtung an der Verschalung vorgesehen. Die Trennsäule weist eine Einfach-Kapillare auf, wobei Teilbereiche der Kapillare außerhalb der temperierten Verschalung angeordnet sind mit extern angeordneten Anschlüssen.

Ausgehend von dem zuletzt genannten Stand der Technik besteht ein Bedürfnis, eine solche portable Gasanalysevorrichtung hinsichtlich Robustheit und breiterer Verwendbarkeit auch bei ungünstigen Umgebungsbedingungen zu verbessern.

Es ist die Aufgabe der Erfindung, eine derart verbesserte portable Gasanalysevorrichtung zu schaffen.

Die erfindungsgemäße Lösung liegt in den Merkmalen der unabhängigen Ansprüche. Vorteilhafte Weiterbildungen sind Gegenstand der abhängigen Ansprüche.

Bei einer Messeinrichtung für eine tragbare Gasanalysevorrichtung, insbesondere für leicht flüchtige Verbindungen, umfassend eine Trennsäule mit einem Detektor ist eine die Trennsäule innen und außen umgebende eine Verschalung vorgesehen , wobei die Verschalung aus einem gut wärmeleitenden, insbesondere metallischen, Material besteht und eine thermische Stabilisierungseinrichtung aufweist, die einen Temperatursensor sowie ein Heizelement an der Verschalung umfasst, wobei erfindungsgemäß die Trennsäule als eine Multikapillareinheit aus parallel angeordneten einzelnen Kapillaren in gebogener Form ausgeführt ist, und die Verschalung die Multikapillareinheit umschließend ausgeführt ist sowie mit einem gemeinsamen Anschlussblock aus ebenfalls wärmeleitendem Material versehen ist, in welchem Anschlüsse der Kapillaren sowie von Zu-/Abfuhrleitungen für die Kapillaren kombiniert sind.

Die Erfindung beruht auf dem Gedanken, mit der die an sich dünnen und fragilen Kapillaren umgebenden Verschalung einen guten mechanischen Schutz zu verbinden mit funktionalen Vorteilen hinsichtlich Stabilisierung und größerer Toleranz gegenüber schwierigen Umgebungsbedingungen.

Die Verschalung bewirkt einerseits einen hohen Schutz der empfindlichen Multikapillare gegen mechanische Einwirkungen. Die Kapillaren sind mit dünnen Glasfasern vergleichbar und können leicht an einer Knickstelle brechen oder an ihren Enden aus einer Halterung herausbrechen. Die Verschalung fungiert somit als Schutzraum, in dem die Krümmung der Kapillaren vorgegeben wird, die als Bündel zusammengefasst sind und fest in das robuste Material der Verschalung eingeschlossen sind. Indem die temperaturgeregelte Verschalung die gebogenen oder in mehreren Umläufen gewickelten Kapillaren unmittelbar umgibt, bildet sie andererseits einen Raum, in dem einheitliche und kontrollierte Bedingungen herrschen, der insbesondere von der Temperatur und Feuchtigkeit der Umgebung getrennt ist. Sie fungiert somit auch als kontrollierter Raum, ähnlich einem Labor, nur in einem viel kleineren Maßstab. Diese Doppelwirkung der Verschalung für die Kapillaren bildet den eigentlichen Kern der Erfindung. Damit ermöglicht es die Erfindung, die einander entgegenstrebenden Anforderungen hinsichtlich größerer Robustheit zu vereinbaren mit breiterer, insbesondere portabler Verwendbarkeit. Dies in einem portablen Gerät zu vereinen ist ein besonderer Verdienst der Erfindung, für den es im Stand der Technik kein Beispiel gibt.

Weiter ist die Verschalung mit einem gemeinsamen Anschlussblock (nachfolgend als Multi-Anschlussblock bezeichnet) versehen, der den Anschluss der Kapillaren sowie den Anschluss der Zuleitungen und Abfuhrleitungen für die Kapillaren kombiniert. Der Multi-Anschlussblock schließt ferner den Zugang zu dem Hohlraum, in dem die in mehreren Umläufen gewickelten Kapillaren in der Verschalung angeordnet sind, nach außen hin ab, was zu einer weiteren Verbesserung hinsichtlich Temperierung und Wärmedämmung führt. Die Zusammenfassung in einem Multi-Anschlussblock steigert nicht nur die Kompaktheit, sondern bietet ferner den Vorteil hoher Robustheit. Es hat sich gezeigt, dass gerade der Multi-Anschlussblock und insbesondere dessen Anbindung an die Kapillaren von entscheidender Bedeutung für die Robustheit sein können. Damit sind die empfindlichen Kapillaren sowohl in der Verschalung an sich sowie auch durch deren Anschluss an den Multi-Anschlussblock optimal geschützt. Hierbei besteht der Multi-Anschlussblock ebenfalls aus wärmeleitendem Material. Damit nimmt er in einer der Verschalung entsprechenden Weise an der Temperierung teil. Dies begünstigt eine homogene Temperaturverteilung in der Verschalung und an der Multikapillareinheit.

Unter "gut wärmeleitend" wird vorliegend ein Material verstanden, das einen Wärmeleitkoeffizient von mindestens 10 W/(m*K) aufweist.

Die Erfindung bezieht sich ferner auf eine tragbare Gasanalysevorrichtung mit der entsprechenden Messeinrichtung als Baugruppe. Zur näheren Erläuterung wird auf die Beschreibung verwiesen.

Zweckmäßigerweise sind mehrere Heizelemente vorgesehen und so an der Verschalung angeordnet, dass die Multikapillareinheit homogen temperiert ist. Es wird somit dank der so beanspruchten Heizelemente erreicht, dass die thermischen Bedingungen im Messgerät besser kontrolliert sind, insbesondere die Temperatur der temperaturempfindlichen Multikapillareinheit mit ihren gebogenen oder in Umläufen gewickelten Kapillaren weitgehend konstant gehalten werden kann. Auf diese Weise können Ungenauigkeiten und unerwünschte Effekte durch schwankende oder während des Messprozesses veränderte Temperaturen minimiert werden. Durch die Anordnung der Heizelemente verteilt an der Verschalung selbst ergibt sich ferner eine gezielte Einwirkung, sodass mit einem Minimum an Energie die gewünschte Temperatur eingestellt und gehalten werden kann. Die sparsame Energieverwendung ist besonders günstig für die portable Anwendung der tragbaren Gasanalysevorrichtung, auch im Hinblick auf eine vorzugsweise eigensichere Ausführung, bei der die elektrische Leistung begrenzt sein muss. Die Anordnung mehrerer Heizelemente bietet ferner den Vorteil, dass eine Redundanz gegenüber dem Ausfall einzelner Heizelemente erreicht wird. Die Zuverlässigkeit der tragbaren Gasanalysevorrichtung im Betrieb wird dadurch erhöht.

Vorzugsweise ist die Multikapillareinheit mit einem wärmeleitfähigen Haltemittel in der Verschalung verankert, insbesondere mittels eines wärmeleitenden Adhäsionsmittels, das vorzugsweise den Hohlraum in der Verschalung um die Multikapillareinheit ausfüllt. Mit dieser Verankerung wird zum einen eine bessere mechanische Schutzwirkung erreicht, da unerwünschte und gegebenenfalls schädliche Bewegungen der Kapillaren innerhalb der Verschalung auf diese Weise vermieden werden. Durch die wärmeleitende Ausführung des Adhäsionsmittels wird sichergestellt, dass die Multikapillareinheit thermisch an ihre Verschalung angekoppelt ist. Da die Verschalung selbst erfindungsgemäß aus einem wärmeleitenden Material besteht, sichert dies einen guten Wärmetransfer auf die Kapillaren sowie eine homogene Temperatur an den Kapillaren selbst.

Die Multikapillareinheit ist vorzugweise so ausgeführt, dass sie eine in mehreren Umläufen gewickelte Kapillare aufweist. Insbesondere ist es zweckmäßig, wenn die Verschalung die Multikapillareinheit ringförmig beidseitig umschließt. Damit wird auf besonders kompakte wie auch zuverlässige Weise sowohl ein mechanischer Schutz der Multikapillareinheit erreicht, und andererseits in funktionaler Hinsicht die Temperierung der Multikapillareinheit erreicht. Die ringförmige Gestaltung ermöglicht eine besonders kompakte und robuste Ausführung. Ferner kann vorzugsweise vorgesehen sein, dass in einem Innenraum des Rings weitere Komponenten der tragbaren Gasanalysevorrichtung angeordnet sind, wodurch der Raum im Inneren des tragbaren Messgeräts effizient genutzt wird.

Eine zweckmäßige Gestaltung der Verschalung ist, wenn sie im Querschnitt trogartig geformt ist und durch einen abnehmbaren Deckel verschlossen ist. Die trogartige Gestaltung erlaubt eine positionssichernde Aufnahme der Multikapillareinheit. Die trogartige Gestaltung bietet ferner den Vorteil, dass die Multikapillareinheit direkt von oben eingelegt werden kann. Die Gefahr von Beschädigungen der empfindlichen Kapillaren ist damit minimiert. Die Handhabung bei der Montage und Reparaturen ist dadurch beträchtlich vereinfacht. Durch den Deckel wird ein Herausfallen der in mehreren Umläufen gewickelten Kapillaren zuverlässig verhindert. Ferner begünstigt der ebenfalls wärmeleitende Deckel die Einhaltung konstanter Temperaturbedingungen in dem somit abgeschlossenen Raum für die Multikapillareinheit.

Mit Vorteil ist die Verschalung mit thermisch isolierendem Material umgeben. Auf diese Weise können Wärmeverluste der Verschalung verringert werden. Die zur Temperierung der Verschalung und der darin befindlichen Multikapillare erforderliche Energie wird auf diese Weise minimiert. Der geringere Energieverbrauch hat zur Folge, dass kleinere und kompaktere Energiespeicher (Akkumulatoren) verwendet werden können. Dies ist einerseits günstig für die Robustheit der Gasanalysevorrichtung und erleichtert andererseits auch den mobilen Einsatz durch Vermeiden von unnötigem Gewicht.

Vorzugsweise weist der Multi-Anschlussblock Externanschlüsse sowie Internanschlüsse auf. Bei den Internanschlüssen handelt es sich um diejenigen für die als Multikapillareinheit ausgeführte Trennsäule. Unter den Externanschlüssen werden solche für Trägergaszuleitung, Probengaszuleitung, Gasabfuhrleitung sowie eventuelle Anschlüsse für die Abfuhr von Totvolumen verstanden.

Zweckmäßigerweise ist die thermische Stabilisierungseinrichtung so ausgelegt, dass die Temperatur in der Verschalung größer ist als die Umgebungstemperatur, und zwar vorzugsweise einen vordefinierten konstanten Wert erreicht, der über der erwartbaren Höchsttemperatur im Einsatzbereich liegt, beispielsweise 50°C. Indem die Temperatur im kompakt verbundenen gesamten analytischen Pfad der Messeinrichtung, vom Probenanschluss durch die Trennsäule zum Detektor am Ende der Trennsäule, und auch von Messung zu Messung konstant gehalten wird, kann eine Stabilisierung und hohe Vergleichbarkeit der Prozesse in der Messeinrichtung verknüpft mit einem geringen Energieaufwand erreicht werden.

Mit Vorteil ist an dem gemeinsamen Anschlussblock ebenfalls eine Aufnahme für den Detektor des Gaschromatographen, im analytischen Gaspfad hinter der Trennsäule, angeordnet. Die Einhaltung homogener Temperaturbedingungen wird damit deutlich verbessert. Damit ergibt sich eine besonders kompakte und robuste Ausführung, die den Detektor thermisch an den gemeinsamen Anschlussblock, die Verschalung und damit letztlich auch an die Multikapillare anbindet. Da an dem gemeinsamen Anschlussblock die Gaswege ohnehin vorhanden sind, kann auf diese Weise eine Anbindung des Detektors erreicht werden, ohne dass zusätzliche Leitungen erforderlich sind. Dies vereinfacht nicht nur die Herstellung, sondern erhöht durch die Vermeidung unnötiger Leitungsverbindungen auch die Zuverlässigkeit sowie die Robustheit. Außerdem ist durch die direkte Aufnahme eine thermisch günstige Anbindung gewährleistet. Der Detektor ist vorzugsweise als ein Photoionisationsdetektor, Massenspektrometer, Wärmeleitfähigkeitsdetektor und/oder Halbleiter-Gasdetektor ausgeführt.

Vorzugsweise ist ein gesonderter zweiter Detektor vorgesehen, der im Gaspfad vor dem Anfang der Multikapillareinheit angeordnet ist. Mit einem solchen zweiten Detektor kann die Anwesenheit von chemischen Verbindungen in der Probe festgestellt werden, bevor die Probe in die Trennsäule injiziert wird, wodurch mit dem tragbaren Gasmessgerät geeignete Messpunkte gesucht werden können. Damit kann ein Suchbetrieb parallel zu dem eigentlichen Messbetrieb durchgeführt werden. Zweckmäßigerweise ist dazu der Sucherdetektor an dem ersten Teil des Anschlussblocks angeordnet, der zu diesem Zweck eine entsprechende Aufnahme aufweist. Damit ist eine unmittelbare Anbin-dung des Sucherdetektors an den Gaseinlass auf einfache Weise ermöglicht. Damit kann ein schnelles Ansprechen des Sucherdetektors erreicht werden.

Mit Vorteil ist ferner zur Spülung des Sucherdetektors vorgesehen, dass ein Gaspfad von einem Einlass des Probengases am Gehäuse der tragbaren Gasanalysevorrichtung zum Sucherdetektor führt und ein zweiter Gaspfad vom selben Einlass durch die Trennsäule bis zum Detektor führt, wobei die Schaltung eines Ventils bestimmt, ob in einem ersten Modus ein Teil des zweiten Gaspfades im gemeinsamen Anschlussblock bei der Injektion in Richtung der Trennsäule durchströmt wird oder in einem zweiten Modus in Gegenrichtung mit in einem Filter gereinigten Trägergas gespült wird.

Die tragbare Gasanalysevorrichtung umfasst zweckmäßigerweise weiter einen elektrischen Energiespeicher, der zur autarken Versorgung der thermischen Stabilisierungseinrichtung ausgebildet ist. Dank der erfindungsgemäß ausgeführten Anordnung der Kapillaren in einer Verschalung als Wärmespeicher ist der Energieverbrauch minimiert, so dass eine Versorgung der thermischen Stabilisierungseinrichtung mittels eines eingebauten elektrischen Energiespeichers ermöglicht ist. Die Verwendbarkeit der tragbaren Gasanalysevorrichtung im Feldversuch kann damit deutlich gesteigert werden. Damit ist eine ausgesprochen raumsparende Bauweise ermöglicht. Gemäß einem besonders vorteilhaften Aspekt der Erfindung ist die gesamte Messeinrichtung mit der Multikapillare kompakt ausgeführt, und weist vorzugsweise ein Volumen von maximal 0,5 l, weiter vorzugsweise von maximal 0,25 l auf. Dank einer solch räumlich kleinen Ausführung wird eine geringe Belastung für den Anwender im mobilen Einsatz erreicht, da das Gasmessgerät dauerhaft in der Hand oder am Körper getragen werden kann. Zweckmäßigerweise sind der elektrische Energiespeicher und die Verschalung in Stapelkonfiguration angeordnet, wobei vorzugsweise der elektrische Energiespeicher oben angeordnet ist (bezogen auf die normale Betriebslage der erfindungsgemäßen tragbaren Gasanalysevorrichtung). Der elektrische Energiespeicher unterstützt somit aufgrund seiner Eigenerwärmung zusätzlich die Temperierung der Multikapillareinheit.

Zweckmäßigerweise ist die Messeinrichtung, insbesondere die Elektronik der Temperaturstabilisierungseinheit und der Detektoren, so ausgeführt, dass keine Zündgefahr durch starke Wärmeentwicklung oder Funkenbildung, etwa bei Kurzschlüssen, entstehen kann. Eine Leistungsbegrenzung sämtlicher elektronischer Bauteile und die Ausführung in Redundanzen in parallelen und seriellen Mehrfachstrukturen verringern die Wahrscheinlichkeit von Ausfällen und Kurzschlüssen erheblich und führen bei Fehlfunktionen zum Ausfall der Funktion ohne Leistungsspitzen, starke Wärmeentwicklung oder dergleichen. Durch diese Weise sind Gefährdungen der Eigensicherheit der tragbaren Gasanalysevorrichtung, wie insbesondere von induktiven Bauelementen und des dadurch hervorgerufenen Potenzials von elektrischen Funkenentladungen, minimiert. Insbesondere ist die Messeinrichtung, insbesondere die Steuerelektronik der thermischen Stabilisierungseinrichtung, so ausgeführt, dass zur Vermeidung von unerwünschtem Energietransfer, insbesondere durch Einstreuungen oder Lichtbögen, Mindestabstände zwischen elektrischen Netzen eingehalten werden, zur Vermeidung einer unzulässig hohen Oberflächentemperatur die elektrische Leistung an Bauteilen limitiert ist, und zur Vermeidung von kritischen Ausfällen oder Kurzschlüssen sicherheitsrelevante Bauteile redundant bzw. mehrfach ausgeführt sind. Unabhängig davon ist vorzugsweise die tragbare Gasanalysevorrichtung explosionsgeschützt ausgeführt. Das bedeutet, dass sie insbesondere eigensicher gestaltet ist. Dies gilt insbesondere hinsichtlich einer Begrenzung des Energievorrats, was durch die erfindungsgemäße energiesparende Gestaltung begünstigt ist. Ferner bedeutet eigensicher, dass Mindestabstände von Komponenten und Kontakten eingehalten werden. Durch die Gewährleistung der Eigensicherheit wird nicht nur ein größerer Schutz des Benutzers erreicht, sondern auch eine Zulassung als "Ex-geschützt" ermöglicht. Das Verwendungsspektrum wird damit weiter erhöht. Die Attribute "explosionsgeschützt" bzw. "eigensicher" sind technische Fachbegriffe, die dem hier berufenen Fachmann bekannt sind und in einschlägigen Normen und Zertifikaten exakt spezifiziert sind; sie bedürfen daher keiner weiteren Erläuterung.

Zweckmäßigerweise ist die Messeinrichtung umfassend die Trennsäule und den Detektor als eine eigene, austauschbare Baugruppe ausgeführt. Auf diese Weise kann bei Defekt oder Wartung ein einfacher Austausch ermöglicht werden. Die Servicefreundlichkeit der tragbaren Gasanalysevorrichtung erhöht sich dadurch. Auch lassen sich durch den Austausch von vormontierten Messeinrichtungen mit unterschiedlichen Materialien der Kapillaren und/oder Längen der Trennsäule die Messgeräte für bestimmte Anwendungen umrüsten bzw. optimieren.

Die Vorteile der Erfindung lassen sich wie folgt zusammenfassen: Die Erfindung schafft eine verbesserte transportable Gasanalysevorrichtung, die sich überdies als eigensicher für den Explosionsschutz zertifizieren lässt. Die Anforderungen für die Eigensicherheit der transportablen Gasanalysevorrichtung und auch die Anforderung, sie länger ohne externe Stromversorgung betreiben zu können, verlangen nach einer begrenzten Leistungsaufnahme durch die Heizeinheiten. Gleichzeitig muss in der Baugruppe für die Gaschromatographie eine bestimmte Temperatur über der Außentemperatur erreicht werden, beispielsweise 50°C auch bei 0°C Außentemperatur. Die Gaspfade in der Messeinrichtung, insbesondere die Trennsäule, müssen daher möglichst effizient geheizt werden, um eine ausreichende Akkulaufzeit von beispielsweise mindestens vier Stunden sicherzustellen. In der erfindungsgemäßen Anordnung geschieht dies durch einen kompakten Verbund von Bauteilen im Inneren, die durch anliegende Heizelemente kontrolliert geheizt werden, wobei eine wärmeleitende Verschalung die als Multikapillareinheit ausgeführte Trennsäule umschließt und die Gaspfade an den Enden der Multikapillareinheit in einem einzigen oder zwei getrennten Multi-Anschlussblöcken umschlossen werden und dieser wärmeleitende innere Verbund nach außen durch eine weitere Schicht wärmeisoliert und mechanisch geschützt ist. Der analytische Gaspfad vom Probeneinlass bis zum über einen Anschlussblock am Ausgang der Multikapillare angeschlossenen Detektor ist ebenfalls Teil des geheizten Verbundes. Vorteilhaft kann innerhalb der Isolierung auch die Platine mit den Heizelementen und Temperatursensoren gemeinsam verbunden in einem elektronischen Regelkreis verbaut sein. Die Wahl einer bestimmten Spezifikation für die Trennsäule und den Detektor bestimmt maßgeblich, für welche Stoffe das Messgerät geeignet bzw. optimiert ist. Diese Bauteile in einer kompakten Baugruppe zu verbauen, ermöglicht daher einen erleichterten Austausch bei Reparaturen und Umrüstungen durch den Hersteller, indem die gesamte Baugruppe ausgetauscht wird.

Verglichen mit dem Stand der Technik, insbesondere der bisherigen Lösung der Anmelderin, erreicht die Erfindung eine kompaktere und robustere Messeinrichtung, eine längere Einsatzdauer des portablen Gasmessgerätes, besser vergleichbare Messergebnisse unabhängig von den Umgebungstemperaturen (beispielsweise von -10°C bis 40°C) und zudem Zertifizierung und Einsatz als eigensicheres Gerät für den Einsatz in Anlagen mit Explosionsgefahr. Die Reproduzierbarkeit von Messungen wird deutlich verbessert, auch zwischen zwei Geräten aus einer Serie, wodurch die Archivierung und die Meta-Analyse von aufeinanderfolgenden Messungen verbessert wird, insbesondere wenn ein Anwender mehrere baugleiche Geräte über einen längeren Zeitraum einsetzt. Diese anspruchsvolleren Spezifikationen gleichzeitig zu erfüllen ist der Verdienst der Erfindung, in deren Kern die Ausführung der Messeinrichtung als kompakte Baugruppe steht, die effizienter heizbar sowie mechanisch robuster und in einer vorteilhaften Ausführung eigensicher ist.

Nachfolgend wird die Erfindung beispielhaft unter Bezugnahme auf die beigefügte Zeichnung näher erläutert. Es zeigen:
- Fig. 1: eine perspektivische Ansicht einer tragbaren Gasanalysevorrichtung;
- Fig. 2a, b: eine Aufsicht bzw. gespiegelte Querschnittsdarstellung einer Messeinrichtung als ein erläuterndes Beispiel;
- Fig. 3a, b: eine Aufsicht bzw. Querschnittsdarstellung der Messeinrichtung gemäß einem Ausführungsbeispiel;
- Fig. 4a, b: eine Aufsicht bzw. Querschnittsdarstellung der Messeinrichtung als ein weiteres erläuterndes Beispiel;
- Fig. 5a, b: eine Aufsicht bzw. Querschnittsdarstellung der Messeinrichtung gemäß einem weiteren Ausführungsbeispiel;
- Fig. 6: einen Längsschnitt durch einen Anschlussblock des weiteren Ausführungsbeispiels;
- Fig. 7a, b, c: eine Aufsicht mit zwei Detailzeichnungen im Querschnitt zu einer kompakten Messeinrichtung mit kurzer Trennsäule ohne mehrfache Wicklung gemäß einem nochmals weiteren Ausführungsbeispiel; und
- Fig. 8: eine ergänzende Aufsicht bzw. Querschnittsdarstellung zum ersten Ausführungsbeispiel.

Eine in ihrer Gesamtheit mit der Bezugsziffer 1 bezeichnete tragbare Gasanalysevorrichtung weist ein Gehäuse 10 auf, an dessen Stirnseite 11 ein Einlass 12 für eine Proben-Gaszuführung angeordnet ist. Im Inneren des Gehäuses 10 sind eine Messeinrichtung 7 sowie ein elektrischer Energiespeicher 17 angeordnet.

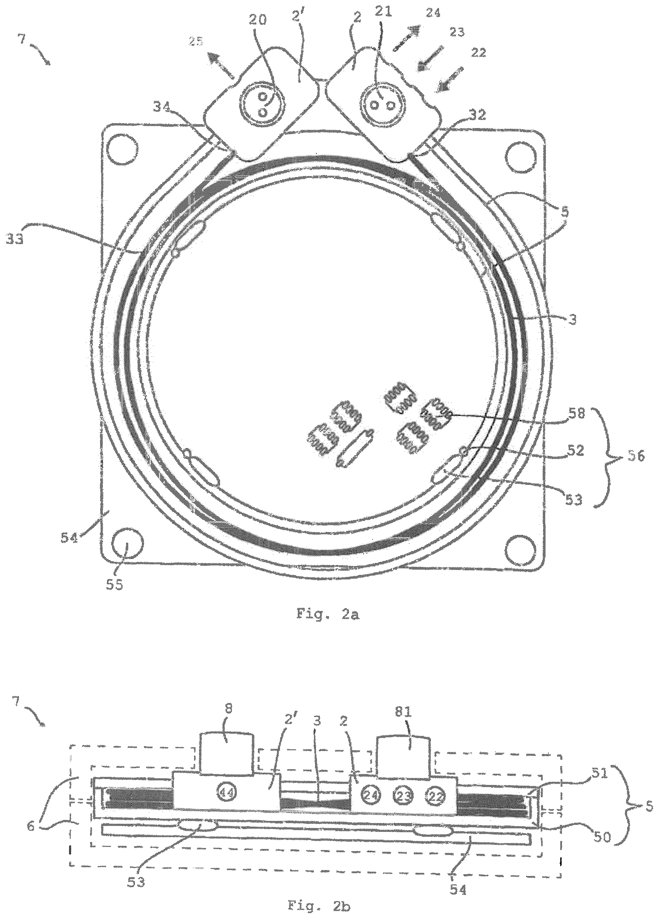

Die Messeinrichtung 7 umfasst eine Trennsäule 3 (siehe Fig. 2a, b) sowie einen Detektor 8 und einen optionalen Sucherdetektor 81. An einer Stirnseite der Messeinrichtung 7 sind mehrere Öffnungen angeordnet, die zur Zufuhr bzw. Abfuhr von Probengas bzw. Trägergas dienen, wie nachfolgend noch näher erläutert werden wird. Die Gasleitungen an sich sind aus Gründen der Übersichtlichkeit nicht dargestellt.

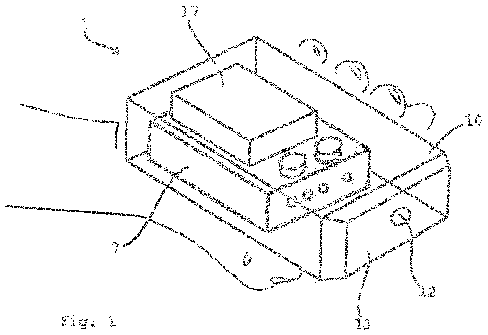

Zur Darstellung der Größenverhältnisse ist in Fig. 1 das Ausführungsbeispiel der tragbaren Gasanalysevorrichtung 1 in Relation zu der Hand eines Benutzers dargestellt.

Es wird nun Bezug genommen auf Fig. 2a, b und das dort dargestellte erläuternde Beispiel.

Bei diesem ist ein Multi-Anschlussblock ausgeführt in einer zweiteiligen Variante, die vorliegend mit den Bezugsziffern 2 und 2' bezeichnet sind. Der erste Teil 2 des Multi-Anschlussblocks ist ausgebildet zur Gaszuführung (Injektion) und zur Suche (versehen mit einem Sucherdetektor 81), und der zweite Teil 2' zur eigentlichen Messung (versehen mit einem Detektor 8). Die beiden Teile 2, 2' des Anschlussblocks sind an beiden Enden mit einer in mehreren Umläufen gewickelten Multikapillare 3 verbunden. Der erste Teil 2 des Anschlussblocks (Injektionsblock) hat seitlich zwei Eingänge für Gaspfade, einen 22 für die Probe und einen 23 für ein Trägergas, und seitlich einen Ausgang 24 für einen Abluftweg des Sucherdetektors 81. Auf der Oberseite des Injektionsblocks 2 ist eine zweite Aufnahme 21 für den Sucherdetektor 81 vorgesehen, im Beispiel ein Photoionisationsdetektor, der mit einer Dichtung (nicht dargestellt) angebracht ist. An einer Seite des Injektionsblocks 2 ist ein Anfang 32 der Multikapillare 3 befestigt, die mehrfach aufgewickelt ist (in mehreren Umläufen gewickelt - Wickelbereich 33). Die Multikapillare 3 ist mit ihrem Ende 34 an dem Teil 2' des Anschlussblocks (Detektionsblock) befestigt, der seitlich einen Anschluss 25 für einen Ausgangs-Gaspfad hat und auf der Oberseite eine Aufnahme 20 für einen Detektor 8 aufweist, im Beispiel ebenfalls ein Photoionisationsdetektor. Beide Teile des Anschlussblocks, also der Injektionsblock 2 sowie der Detektionsblock 2', sind aus einem wärmeleitenden und chemisch inerten Material gefertigt, hier aus poliertem Edelstahl. Die Multikapillare 3 ist in einem ring- und U-förmigen Profil 50 aus Aluminium als Verschalung 5 eingeschlossen, das von einem Deckel 51 aus Aluminium abgeschlossen ist. Das Innere des Profils 50 um die Multikapillare 3 kann mit einem wärmeleitenden Kleber 35 ausgefüllt werden. Das Profil 50 ist mit einer Platine 54 verbunden, auf der eine Steuerelektronik 58 einer thermischen Stabilisierungseinrichtung 56 angebracht ist, wobei die Heizelemente 53 und Temperatursensoren 52 jeweils als Widerstände auf der Platine 54 unter dem Profil 50 angebracht sind. Die Steuerelektronik 58 ist so ausgeführt, dass sie die Anforderungen für die Zertifizierung der Eigensicherheit erfüllt. Die Platine 54 mit der thermischen Stabilisierungseinrichtung 56 dient auch als Grundplatine, auf die alle anderen Bauteile vertikal aufgebaut werden können. Von allen Seiten ist die Verschalung 5 mit einer wärmeisolierenden Schicht 6 aus Schaumstoff umgeben, die ebenfalls Stoßenergie aufnimmt. Im Beispiel ragen die Rückseiten der Detektoren 8, 81 aus der Isolierung 6. In dieser Ausführung sind die beiden Teile 2, 2' des Anschlussblocks gemeinsam an einer Seite angebracht, um diese an weitere Gaspfade (nicht dargestellt) anzuschließen. Bohrungen 55 in der Platine 54 sind vorgesehen, um die Messeinrichtung 7 in dem Gehäuse 10 zu befestigen.

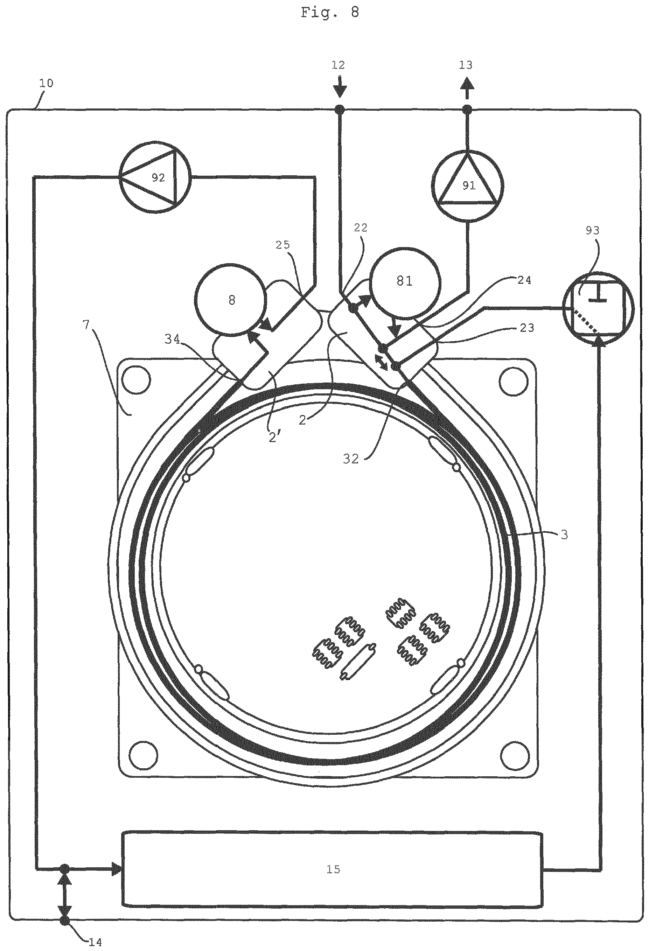

Die Gaspfade, die von den Anschlüsse der im ersten Ausführungsbeispiel beschriebenen Messeinrichtung ausgehen und deren Funktion im tragbaren Gasmessgerät werden bezugnehmend auf Fig. 8 weiter ausgeführt. Die Messeinrichtung 7 ist im Gehäuse 10 eingeschlossen, das in dieser Ausführung einen Einlass 12, einen Auslass 13 und einen kombinierten Trägergaseinlass und zweiten Auslass 14 aufweist. In diesem Ausführungsbeispiel ist das Trägergas Luft, die in einem Filter 15 aufbereitet wird, bevor das Trägergas am Eingang 23 des Injektionsblocks 2 eingeleitet wird. Der Gasfluss in den Gaspfaden, dessen Richtung in Fig. 8 mit Pfeilen gekennzeichnet ist, wird von zwei dauerhaft betriebenen Gebläseeinheiten 91, 92 erzeugt. Ein erster Gaspfad führt das Probengas vom Einlass 12 über den Einlass 22 in den Injektionsblock 2, durch den Sucherdetektor 81, über den Auslass 24 in die erste Gebläseeinheit 91 und am Auslass 13 zurück aus dem Gehäuse 10. Ein zweiter Gaspfad beginnt ebenfalls am Einlass 12 des Probengases, führt ebenfalls am Einlass 22 in den Injektionsblock, führt dann aber durch die Trennsäule 32, 3, 34 bis zum Detektionsblock 2' durch den Detektor 8 in den Ausgang 25 zur zweiten Gebläseeinheit 92. Ein Gaskreislauf schließt den Pfad vom Ausgang 25 am Detektorblock 2' durch die zweite Gebläseeinheit 91 durch den Filter 15 und ein Ventil 93 zurück über den Eingang 23 des Trägergases in den Injektionsblock 2, wobei an einer Stelle 14 vor dem Filter passiv Gas eingelassen oder ausgelassen wird, um das Gasvolumen auszugleichen. Mit der Stellung eines Ventils 93 werden zwei Betriebsmodi ermöglicht. Der erste Gaspfad durch den Sucherdetektor 81 ist von der Ventilstellung unberührt. Der oben beschriebene zweite Gaspfad vom Einlass der Probe 12 zum Detektor 8 wird nur hergestellt, wenn das Ventil 93 gesperrt wird, also kein Gasfluss am Eingang 23 des Injektionsblocks 2 ankommt (erster Modus). Ist das Ventil 93 geöffnet, spült das Trägergas von Eingang 23 zum Ausgang 24 im Injektionsblock 2 und erlaubt keinen Gasfluss vom Eingang 22 des Probengases in die Trennsäule 3 und weiter zum Detektor 8 (zweiter Modus). Stattdessen werden bei offenem Ventil 93 die Trennsäule 3 und der Detektor 8 mit im Filter 15 gereinigten um entlang einem Kreislauf strömenden Trägergas gespült, wobei am Einlass 14 zusätzliches Volumen aufgenommen wird. Dieses Verfahren mit zwei Betriebsmodi und der Umkehrung des Gasflusses im Injektionsblock ist durch die Anmelderin in einer früheren Anmeldung (Anmeldeaktenzeichen DE 10 2015 219 838) veröffentlicht.

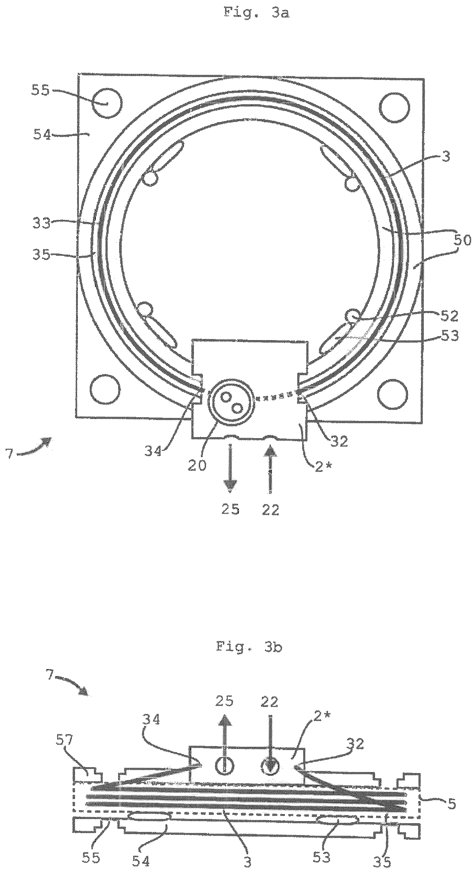

Ein Ausführungsbeispiel der Erfindung, in Fig. 3a, b dargestellt, besteht in einer einfacheren Ausführung. Es stimmt im Wesentlichen mit dem in Fig. 2a, b dargestellten erläuterndem Beispiel überein, wobei gleichartige Komponenten dieselben Bezugszeichen tragen. Der Unterschied besteht im Wesentlichen darin, dass bei dem Ausführungsbeispiel nur ein einteiliger Anschlussblock 2* für Gas-Eingang, Gas-Ausgang und DetektorAnschluss vorgesehen ist. In dieser Ausführung ist auf der Oberseite der Verschalung 5 eine Gegenplatine 57 montiert, die ebenso wie die (Grund-)Platine 54 Bohrungen 55 aufweist, sodass der Verbund mit Schrauben (nicht dargestellt) zusammengepresst werden kann, um die Wärmekopplung zu verbessern. Im Übrigen wird auf die Beschreibung zu dem erläuternden Beispiel verwiesen. In dieser Ausführung ist im Gegensatz zum erläuternden Beispiel weder ein Sucherdetektor noch ein Gaswegesystem am Probeneinlass ausgeführt. Eine Mischung mit Trägergas oder ein vorgeschalteter Sucher könnten in dieser Ausführung extern vorhanden, aber nicht in der Baugruppe der Messeinrichtung integriert sein. Während die Anschlussblöcke im erläuternden Beispiel flach in einer Ebene mit der Verschalung montiert sind, ist der Anschlussblock 2* in diesem Ausführungsbeispiel auf der Oberseite der Verschalung angeordnet. Dadurch wird die Baugruppe höher, aber auch kürzer. Außerdem kann die Form der Verschalung als perfekter Kreis vorzugsweise mit der maximal zulässigen Krümmung der Kapillare gewählt werden. Die Enden 32, 34 der Multikapillareinheit 3 führen nach oben in den Anschlussblock 2*. Eine so geformte Verschalung aus Metall ist besonders einfach zu fertigen. Bei den Ausführungsbeispielen sind die Heizelemente 53 und Temperatursensoren 52 aus Darstellungsgründen in der Aufsicht innen an der Verschalung 5 abgebildet, vorzugsweise sind diese aber darunter (wie in den jeweiligen Querschnitten abgebildet) direkt auf der Platine 54 bestückt, da dies eine besonders stabile Art der Anbringung ist, bei der keine weitere Verdrahtung nötig ist und die Heizelemente 53 zwischen der wärmeleitenden Verschalung 5 und der vergleichsweise isolierenden Platine 54 eingeschlossen sind, wodurch ein hoher Effizienzgrad beim Heizen der Verschalung erreicht wird.

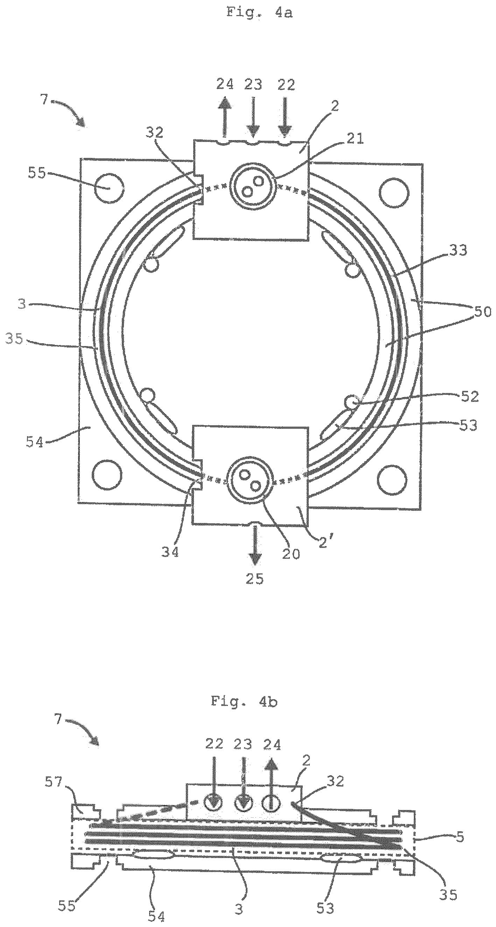

Ein weiteres erläuterndes Beispiel, in Fig. 4a, b dargestellt, zeigt eine Anordnung ähnlich dem erläuternden Beispiel (in der Funktion) und (in der Form) dem Ausführungsbeispiel. Es unterscheidet sich von diesem im Wesentlichen dadurch, dass hierbei die Anschlüsse des erläuternden Beispiels verwendet sind, wobei die beiden Teile 2, 2' des Anschlussblocks gegenüberliegend angeordnet sind. Im Übrigen wird auf die Beschreibung zu dem erläuternden Beispiel verwiesen.

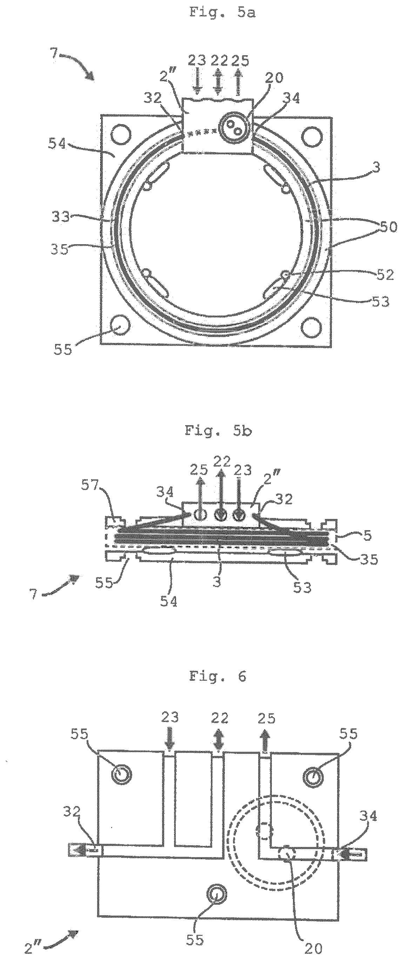

Ein weiteres Ausführungsbeispiel, in Fig. 5a, b dargestellt, zeigt eine Variante basierend auf dem Ausführungsbeispiel und umfassend einen einteiligen Anschlussblock mit integriertem Injektions- und Detektionsblock 2" an einer Seite. Er besitzt auf der einen Seite einen Eingang 23 für Trägergas, einen entsprechenden Auslass 25 sowie einen Ein- und Ausgang 22 zum Anschluss an einen Sucher. An einer Seitenfläche des integrierten Injektions- und Detektionsblocks 2" ist der Anfang 32 der Kapillare 3 angeschlossen, und an der gegenüberliegenden Seitenfläche ist das Ende 34 der Kapillare 3 angeschlossen und intern verbunden mit dem Auslass 25 sowie mit einer Aufnahme 20 für den Detektor 8.

Als beispielhafte Ausführung des integrierten Injektions- und Detektionsblocks 2" sind die inneren Gaswege in Fig. 6 dargestellt. Der Probeneinlass 22 ist nach dem Gegenflussprinzip ausgeführt, der durch einen zweiten Einlass von Trägergas gesteuert wird, wobei der Gasfluss nur bei der Injektion in den Block 2" gerichtet ist und in einem zweiten Modus das Gas vom Block 2" in Gegenrichtung, vorzugsweise in einen externen nicht abgebildeten Sucher strömt. Es besteht in beiden Modi ein Sog zur Abluft (erzeugt von einem externen nicht abgebildeten Gebläse) wodurch ein gerichteter Gasfluss vom Anfang 32 durch die Kapillare 3 zu deren Ende 34 besteht. Bei der Injektion wird der Trägergaszustrom in 23 unterbrochen (oder vermindert) und so das Probenvolumen in den Einlass 22 injiziert (und eventuell mit einem Anteil Trägergas vermischt). Dagegen wird in einem zweiten Modus mehr Trägergas in 23 eingelassen als am Ausgang 25 abgesaugt, wodurch einerseits keine Probe injiziert wird, sondern am Probeneinlass Trägergas ausgeblasen und andererseits die Multikapillare 3 mit Trägergas gespült wird. Ein solcher Vorgang wird in dieser Anmeldung nicht beansprucht und ist hier nur zum besseren Verständnis der mehrfachen Anschlüsse beschrieben. Es sind viele Ausführungen von Anschlüssen und Gaswegen zur Probenvorbereitung, Mischung, Anreicherung etc. denkbar, die wegen der Temperierung des Anschlussblocks vorteilhaft in diesen integriert werden können.

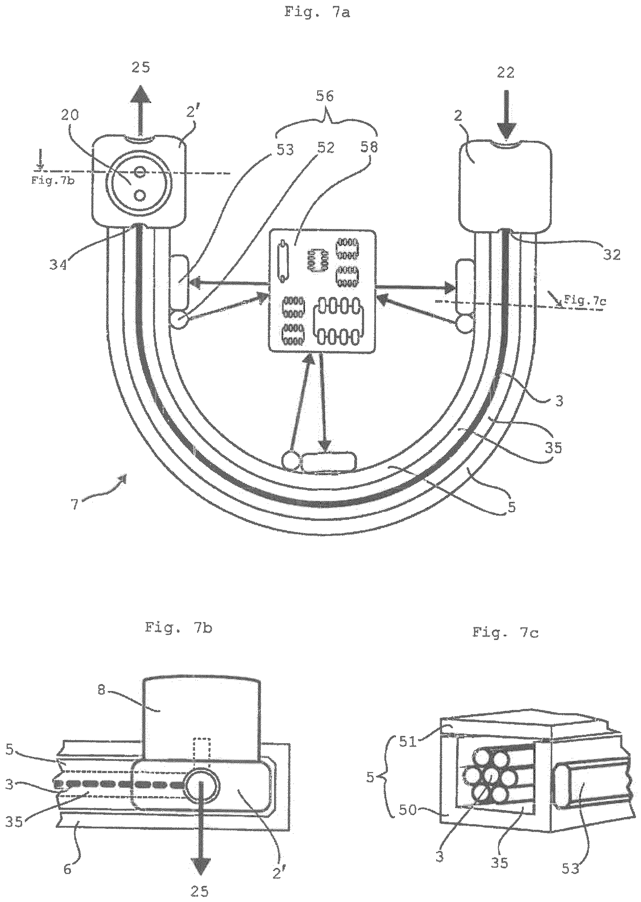

Ein nochmal weiteres Ausführungsbeispiel, in Fig. 7a, b, c dargestellt, unterscheidet sich von den vorherigen Ausführungsbeispielen durch eine noch kürzere Trennsäule, wobei die Multikapillar-einheit 3 nicht mehrfach gewickelt, sondern in einen einfachen Ring gebogen ist. Eine kürzere Kapillare erlaubt kürzere Messzeiten, wobei im Gegenzug Sensitivität und Selektivität der Messung eingebüßt werden. Im Beispiel ist die Trennsäule etwa 10 cm lang und, wie in Fig. 7c dargestellt, aus sieben parallelen Einzelkapillaren zusammengesetzt. Zum Vergleich sind in den anderen Ausführungsbeispielen die Multikapillareinheiten 3 mit mehr als zehn Kapillarsträngen von jeweils 1 m gewählt, wobei bei einer vorgegebenen Form der Verschalungen jeweils volle Wicklungen von etwa 10 cm zusätzlich oder abzüglich gewählt werden können. Während bei 1 m Trennsäule in den anderen Ausführungsbeispielen eine Messung in unter einer Minute möglich ist, wird in diesem Ausführungsbeispiel eine Messung in 10 s machbar. Zudem ist in diesem Ausführungsbeispiel die gesamte Baugruppe flacher ausgeführt, da die Verschalung 5 nicht auf einer Platine montiert ist, sondern die Steuerelektronik 58 für einen Regelkreis der thermischen Stabilisierungseinrichtung 56 (ferner umfassend den Temperatursensor 52 und die Heizelemente 53) im Innenraum der Baugruppe angeordnet ist. Als Steuerelektronik 58 sind beispielhaft verschiedene Komponenten um einen Mikrocontroller dargestellt. In diesem Ausführungsbeispiel sind wie dem weiteren erläuternden Beispiel nur die nötigen Extern-Anschlüsse für Eingang 22 und Ausgang 25 des Gaspfades vorhanden, wobei der Anfang der Multikapillareinheit 32 in einem passiven Anschlussblock 2 fest verbunden ist und das Ende 34 entsprechend im Anschlussblock 2' fest verbunden ist, auf dem über einen Detektoranschluss 20 (abgebildet in Fig. 7a) ein Photoionisationsdetektor 8 (abgebildet in Fig. 7b) aufgesetzt ist. Nur der Detektor ragt aus einer Schaumstoffisolation 6 (in Fig. 7b) heraus, die die Baugruppe sonst vollständig abschließt. Aus den drei Ansichten von Fig. 7 wird deutlich, dass die Kapillaren als Bündel in der Multikapillareinheit 3 zusammengefasst sind, die von einem wärmeleitenden Adhäsionsmittel 35 umgeben in einem Trogprofil 50 aus Aluminium eingelegt ist, das zusammen mit einem Deckel 51 aus Aluminium die geschlossene Verschalung 5 bildet. Die Verschalung und die Anschlussblöcke aus Edelstahl haben eine ähnliche Höhe und sind miteinander verbunden, wodurch eine Wärmeübertragung stattfindet. Das Probengas wird schon im Anschlussblock 2 gewärmt und bleibt über den Gaspfad durch die Trennsäule 3 bis in den Detektor 8 gleichmäßig temperiert. Im Gegensatz zu den bisherigen Ausführungsbeispielen sind die Heizelemente 53 und Temperatursensoren 52, hier jeweils elektrische Widerstände, nicht unter sondern innen an der Verschalung angeordnet. Ohne den Detektor misst das gezeigte Beispiel nur etwa 6 cm x 6 cm x 1 cm und stellt damit eine besonders kompakte Ausführung als Messeinrichtung für einen besonders schnellen Gaschromatographen dar, der etwa als Warngerät für giftige Verbindungen in der Atemluft am Körper getragen werden kann. Die anderen Ausführungsbeispiele dagegen erlauben bei größerer Abmessung und langsamerer Messung eine sensitivere und spezifischere Messung als Messeinrichtung in einem tragbaren Handgerät. Auch die ersten Ausführungen sind bereits deutlich kompakter und schneller als herkömmliche Messeinrichtungen in Gaschromatographen. Das letzte Beispiel zeigt die Grenzen dieser Erfindung im Hinblick auf Kompaktheit und Geschwindigkeit.

## Patentansprüche

1. Messeinrichtung für eine tragbare Gasanalysevorrichtung, insbesondere für leicht flüchtige Verbindungen, wobei die Messeinrichtung eine Trennsäule mit einem Detektor und
eine die Trennsäule innen und außen umgebende Verschalung (5) umfasst,
wobei die Verschalung (5) aus einem wärmeleitenden, insbesondere metallischen, Material besteht und eine thermische Stabilisierungseinrichtung (56) aufweist, die einen Temperatursensor (52) sowie ein Heizelement (53) an der Verschalung (5) umfasst,
**dadurch gekennzeichnet, dass**
die Trennsäule als eine Multikapillareinheit (3) aus parallel angeordneten Kapillaren in gebogener Form ausgeführt ist, und
die Verschalung (5) die Multikapillareinheit (3) umschließend ausgeführt ist und mit einem gemeinsamen Anschlussblock (2, 2', 2", 2*) aus ebenfalls wärmeleitendem Material versehen ist, in dem Anschlüsse der Kapillaren sowie von Zu-/Abfuhrleitungen für die Kapillaren kombiniert sind.

2. Messeinrichtung nach Anspruch 1, **dadurch gekennzeichnet, dass** die Multikapillareinheit (3) in mehreren Umläufen gewickelte Kapillaren (33) aufweist.

3. Messeinrichtung nach einem der vorangehenden Ansprüche, **dadurch gekennzeichnet, dass** mehrere Heizelemente (53) vorgesehen und so an der Verschalung (5) angeordnet sind, dass die Multikapillareinheit (3, 33) homogen temperiert wird; und/oder die Multikapillareinheit mit einem wärmeleitfähigen Haltemittel in der Verschalung verankert ist, insbesondere einem wärmeleitenden Adhäsionsmittel (35).

4. Messeinrichtung nach einem der vorangehenden Ansprüche, **dadurch gekennzeichnet, dass** die Verschalung (5) die Multikapillareinheit ringförmig beidseitig umschließt, wobei vorzugsweise in einem Innenraum des Rings weitere Komponenten (58) der tragbaren Gasanalysevorrichtung angeordnet sind; und/oder die Verschalung (5) im Querschnitt trogartig geformt ist und durch einen abnehmbaren Deckel (51) verschlossen ist; und/oder die Verschalung (5) mit thermisch isolierendem Material (6) umgeben ist.

5. Messeinrichtung nach einem der vorangehenden Ansprüche, **dadurch gekennzeichnet, dass** der gemeinsame Anschlussblock (2, 2', 2", 2*) ein internes Gaswegsystem aufweist, und vorzugsweise ferner aufweist
- Externanschlüsse für eine Probengaszuleitung (22) und eine Gasabfuhrleitung (25),
- Internanschlüsse für die Enden der Multikapillareinheit (32, 34);
und/oder ein Einlass (22) zur Injektion von Probegas an dem gemeinsamen Anschlussblock (2, 2', 2", 2*) an einer Grenze der Verschalung (5) angeordnet ist.

6. Messeinrichtung nach einem der vorangehenden Ansprüche, **dadurch gekennzeichnet, dass** der gemeinsame Anschlussblock eine Aufnahme (20) für den Detektor (8) aufweist, und vorzugsweise ferner eine zweite Aufnahme (21) für einen zweiten Detektor (81), der im Gaspfad vor einem Anfang der Kapillaren angeordnet ist; und/oder dass der gemeinsame Anschlussblock zweiteilig (2, 2') ausgeführt ist, wobei ein Anfang (32) der Kapillaren in einem ersten Teil (2) und ein Ende (34) in einem zweiten Teil (2') angeordnet sind.

7. Messeinrichtung nach einem der vorangehenden Ansprüche, **dadurch gekennzeichnet, dass** der Detektor (8) und/oder zweiter Detektor (81) als ein Photoionisationsdetektor, Massenspektrometer, Wärmeleitfähigkeitsdetektor und/oder Halbleiter-Gasdetektor ausgeführt ist.

8. Messeinrichtung nach Anspruch 5, **dadurch gekennzeichnet, dass** ein gesonderter zweiter Detektor (81) am gemeinsamen Anschlussblock (2, 2', 2", 2*) vorgesehen ist, vorzugsweise angeordnet an dem ersten Teil (2) des Anschlussblocks.

9. Messeinrichtung nach einem der vorangehenden Ansprüche, **dadurch gekennzeichnet, dass** die Messeinrichtung (7) kompakt ausgeführt ist, und vorzugsweise ein Volumen von maximal 0,5 l, weiter vorzugsweise von maximal 0,25 l aufweist.

10. Messeinrichtung nach einem der vorangehenden Ansprüche, **dadurch gekennzeichnet, dass** die Verschalung (5) auf einer Platine (54) montiert ist, die vorzugsweise als Leiterplatine mit einer Steuerelektronik (58) ausgeführt ist, und weiter vorzugsweise mit mehreren Heizelementen (53) und/oder Temperatursensoren (52) bestückt ist, die vorzugsweise an der Verschalung räumlich verteilt und jeweils zwischen Platine und Verschalung angeordnet sind.

11. Tragbare Gasanalysevorrichtung, insbesondere für leicht flüchtige Verbindungen, mit einem Gasmesspfad, der eine Trennsäule mit einem Detektor (8) als Messeinrichtung (7) umfasst,
**dadurch gekennzeichnet, dass**
die Messeinrichtung (7) nach einem der Ansprüche 1 bis 10 ausgebildet ist.

12. Tragbare Gasanalysevorrichtung nach Anspruch 11, **dadurch gekennzeichnet, dass** ein gesonderter zweiter Detektor (81) am gemeinsamen Anschlussblock (2, 2', 2", 2*) vorgesehen ist, vorzugsweise angeordnet an dem ersten Teil (2) des Anschlussblocks.

13. Tragbare Gasanalysevorrichtung nach Anspruch 12, **dadurch gekennzeichnet, dass** ein Gaspfad von einem Einlass des Probengases (12) am Gehäuse (10) der tragbaren Gasanalysevorrichtung zum zweiten Detektor (81) führt und ein zweiter Gaspfad vom selben Einlass (12) durch die Trennsäule (3) bis zum Detektor (8) führt, wobei die Schaltung eines Ventils (93) bestimmt, ob in einem ersten Modus ein Teil des zweiten Gaspfades im gemeinsamen Anschlussblock (2, 2', 2", 2*) bei der Injektion in Richtung der Trennsäule durchströmt wird oder in einem zweiten Modus in Gegenrichtung mit in einem Filter (15) gereinigten Trägergas gespült wird.

14. Tragbare Gasanalysevorrichtung nach einem der Ansprüche 11 bis 13, **dadurch gekennzeichnet, dass** die tragbare Gasanalysevorrichtung mit ihrer Messeinrichtung, insbesondere eine Steuerelektronik (58) einer thermischen Stabilisierungseinrichtung (56), explosionsgeschützt und/oder eigensicher ausgeführt ist, und dazu so ausgeführt ist, dass zur Vermeidung von unerwünschtem Energietransfer, insbesondere durch Einstreuungen oder Lichtbögen, Mindestabstände zwischen elektrischen Netzen eingehalten werden zur Vermeidung von einer unzulässig hohen Oberflächentemperatur, die elektrische Leistung an Bauteilen begrenzt ist, und zur Vermeidung von kritischen Ausfällen oder Kurzschlüssen sicherheitsrelevante Bauteile redundant bzw. mehrfach ausgeführt sind.

15. Tragbare Gasanalysevorrichtung nach einem der Ansprüche 11 bis 14, **dadurch gekennzeichnet, dass** die Messeinrichtung umfassend die Trennsäule und den Detektor als eine eigene, tauschbare Baugruppe ausgeführt ist.

## Claims

1. Measuring unit for a portable gas analysis device, in particular for highly volatile compounds, wherein the measuring unit comprises a separation column having a detector and
a casing (5) enclosing the separation column on the inside and outside,
wherein the casing (5) consists of a heat-conductive, in particular metallic material and has a thermal stabilization unit (56), which comprises a temperature sensor (52) and a heating element (53) on the casing (5),
**characterized in that**
the separation column is embodied as a multi-capillary unit (3) made of capillaries arranged in parallel in bent form, and
the casing (5) is embodied as enclosing the multi-capillary unit (3) and is provided with a common connector block (2, 2', 2'', 2*) also of heat-conductive material, in which connections of the capillaries and of supply/exhaust lines for the capillaries are combined.

2. Measuring unit according to Claim 1, **characterized in that** the multi-capillary unit (3) has capillaries (33) wound in multiple turns.

3. Measuring unit according to one of the preceding claims, **characterized in that** multiple heating elements (53) are provided and are arranged on the casing (5) in such a way that the multi-capillary unit (3, 33) is temperature-controlled homogeneously; and/or the multi-capillary unit is anchored in the casing by a heat-conductive holding means, in particular a heat-conductive adhesive means (35).

4. Measuring unit according to one of the preceding claims, **characterized in that** the casing (5) encloses the multi-capillary unit in a ring shape on both sides, wherein preferably further components (58) of the portable gas analysis device are arranged in an interior of the ring; and/or the casing (5) is formed trough-like in cross section and is closed by a removable cover (51); and/or the casing (5) is enclosed by thermally insulating material (6).

5. Measuring unit according to one of the preceding claims, **characterized in that** the common connector block (2, 2', 2", 2*) has an internal gas path system, and preferably furthermore has
- external connections for a sample gas supply line (22) and a gas exhaust line (25),
- internal connections for the ends of the multi-capillary unit (32, 34);
- and/or an inlet (22) for the injection of sample gas at the common connection block (2, 2', 2", 2*) at a boundary of the casing (5).

6. Measuring unit according to one of the preceding claims, **characterized in that** the common connection block has a receptacle (20) for the detector (8), and preferably furthermore a second receptacle (21) for a second detector (81), which is arranged in the gas path before a beginning of the capillaries; and/or **in that** the common connection block is embodied in two parts (2, 2'), wherein a beginning (32) of the capillaries is arranged in a first part (2) and an end (34) is arranged in a second part (2').

7. Measuring unit according to one of the preceding claims, **characterized in** the detector (8) and/or second detector (81) is embodied as a photoionization detector, mass spectrometer, thermal conductivity detector, and/or semiconductor gas detector.

8. Measuring unit according to Claim 5, **characterized in that** a separate second detector (81) is provided on the common connector block (2, 2', 2", 2*), preferably arranged on the first part (2) of the connector block.

9. Measuring unit according to one of the preceding claims, **characterized in that** the measuring unit (7) is embodied compactly, and preferably has a volume of at most 0.5 1, more preferably at most 0.25 1.

10. Measuring unit according one of the preceding claims, **characterized in that** the casing (5) is installed on a circuit board (54), which is preferably embodied as a printed circuit board having a control electronics unit (58), and is furthermore preferably equipped with multiple heating elements (53) and/or temperature sensors (52), which are preferably arranged spatially distributed on the casing and in each case between the circuit board and the casing.

11. Portable gas analysis device, in particular for highly volatile compounds, having a gas measuring path, which comprises a separation column having a detector (8) as a measuring unit (7),
**characterized in that**
the measuring unit (7) is designed according to one of Claims 1 to 10.

12. Portable gas analysis device according to Claim 11, **characterized in that** a separate second detector (81) is provided on the common connector block (2, 2', 2", 2*), preferably arranged on the first part (2) of the connector block.

13. Portable gas analysis device according to Claim 12, **characterized in that** one gas path leads from an inlet of the sample gas (12) on the housing (10) of the portable gas analysis device to the second detector (81) and a second gas path leads from the same inlet (12) through the separation column (3) up to the detector (8), wherein the switching of a valve (93) determines whether, in a first mode, a part of the second gas path in the common connector block (2, 2', 2", 2*) has flow through it during the injection in the direction of the separation column or, in a second mode, is flushed in the opposite direction by carrier gas filtered in a filter (15).

14. Portable gas analysis device according to one of Claims 11 to 13, **characterized in that** the portable gas analysis device with its measuring unit, in particular a control electronics unit (58) of a thermal stabilization unit (56), is embodied as explosion protected and/or intrinsically safe, and is embodied so that to avoid undesired energy transfer, in particular by interference or electric arcs, minimum distances are maintained between electrical grids to avoid an impermissibly high surface temperature, the electrical power at components is limited, and safety-relevant components are embodied redundantly or in multiples to avoid critical failures or short-circuits.

15. Portable gas analysis device according to one of Claims 11 to 14, **characterized in that** the measuring unit comprising the separation column and the detector is embodied as a separate, replaceable assembly.

## Revendications

1. Organe de mesure destiné à un dispositif portable d'analyse de gaz, notamment de composés volatils, l'organe de mesure comprenant une colonne de séparation munie d'un détecteur et une coque (5) entourant la colonne de séparation à l'intérieur et à l'extérieur, la coque (5) étant en un matériau thermoconducteur, en particulier métallique, et comportant un organe de stabilisation thermique (56) qui comprend un capteur de température (52) et un élément chauffant (53) sur la coque (5),
**caractérisé en ce que**
la colonne de séparation est réalisée sous la forme d'une unité multi-capillaire (3) formée de capillaires disposés parallèlement sous une forme incurvée, et
la coque (5) est conçue pour enfermer l'unité multi-capillaire (3) et est pourvue d'un bloc de raccordement commun (2, 2', 2", 2*), en matériau également thermoconducteur, dans lequel des raccords de capillaires et de conduites d'amenée/d'évacuation de capillaires sont combinés.

2. Organe de mesure selon la revendication 1, **caractérisé en ce que** l'unité multi-capillaire (3) comporte des capillaires (33) enroulés sur plusieurs tours.

3. Organe de mesure selon l'une des revendications précédentes, **caractérisé en ce qu'**une pluralité d'éléments chauffants (53) sont prévus et sont disposés sur la coque (5) de manière à ce que l'unité multi-capillaire (3, 33) soit régulée en température de manière homogène ; et/ou l'unité multi-capillaire est ancrée dans la coque avec un moyen de retenue thermoconducteur, notamment une colle thermoconductrice (35).

4. Organe de mesure selon l'une des revendications précédentes, **caractérisé en ce que** la coque (5) enferme l'unité multi-capillaire annulairement des deux côtés, d'autres composants (58) du dispositif portable d'analyse de gaz étant de préférence disposés dans un espace intérieur de l'anneau ; et/ou la coque (5) ayant une forme d'auge en coupe transversale et étant fermée par un couvercle amovible (51) ; et/ou la coque (5) étant entourée d'un matériau thermo-isolant (6).

5. Organe de mesure selon l'une des revendications précédentes, **caractérisé en ce que** le bloc de raccordement commun (2, 2', 2", 2*) comporte un système de chemin de gaz interne, et de préférence comporte également
- des raccords externes destinés à une conduite d'amenée de gaz échantillon (22) et une conduite d'évacuation de gaz (25),
- des raccords internes destinés aux extrémités de l'unité multi-capillaire (32, 34) ;
et/ou une entrée (22) d'injection de gaz échantillon est disposée sur le bloc de raccordement commun (2, 2', 2", 2*) au niveau d'une limite de la coque (5).

6. Organe de mesure selon l'une des revendications précédentes, **caractérisé en ce que** le bloc de raccordement commun comporte un logement (20) destiné au détecteur (8), et de préférence également un deuxième logement (21) destiné à un deuxième détecteur (81) qui est disposé dans le chemin de gaz en amont d'un début de capillaires ; et/ou **en ce que** le bloc de raccordement commun est réalisé en deux parties (2, 2'), un début (32) de capillaires étant disposé dans une première partie (2) et une fin (34) étant disposée dans une deuxième partie (2').

7. Organe de mesure selon l'une des revendications précédentes, **caractérisé en ce que** le détecteur (8) et/ou le deuxième détecteur (81) sont conçus comme un détecteur à photoionisation, un spectromètre de masse, un détecteur de conductivité thermique et/ou un détecteur de gaz à semi-conducteur.

8. Organe de mesure selon la revendication 5, **caractérisé en ce qu'**un deuxième détecteur séparé (81) est prévu sur le bloc de raccordement commun (2, 2', 2", 2*), disposé de préférence sur la première partie (2) du bloc de raccordement.

9. Organe de mesure selon l'une des revendications précédentes, **caractérisé en ce que** l'organe de mesure (7) est réalisé de manière compacte, et a de préférence un volume de 0,5 1 maximum, plus préférablement de 0,25 1 maximum.

10. Organe de mesure selon l'une des revendications précédentes, **caractérisé en ce que** la coque (5) est montée sur une carte (54), qui est de préférence conçue comme une carte de circuit imprimé pourvue d'une électronique de commande (58), et encore de préférence d'une pluralité d'éléments chauffants (53) et/ou de capteurs de température (52), qui sont de préférence répartis spatialement sur la coque et sont disposés chacun entre la carte et la coque.

11. Dispositif portable d'analyse de gaz, notamment de composés volatils, comportant un chemin de mesure de gaz qui comprend une colonne de séparation pourvue d'un détecteur (8) comme organe de mesure (7),
**caractérisé en ce que**
l'organe de mesure (7) est réalisé selon l'une des revendications 1 à 10.

12. Dispositif portable d'analyse de gaz selon la revendication 11, **caractérisé en ce qu'**un deuxième détecteur séparé (81) est prévu sur le bloc de raccordement commun (2, 2', 2", 2*), disposé de préférence sur la première partie (2) du bloc de raccordement.

13. Dispositif portable d'analyse de gaz selon la revendication 12, **caractérisé en ce qu'**un chemin de gaz va d'une entrée du gaz échantillon (12) sur le boîtier (10) du dispositif portable d'analyse de gaz au deuxième détecteur (81) et un deuxième chemin de gaz va de la même entrée (12) à travers la colonne de séparation (3) jusqu'au détecteur (8), la commutation d'une soupape (93) déterminant si, dans un premier mode, une partie du deuxième chemin de gaz dans le bloc de raccordement commun (2, 2', 2", 2*) est parcourue par un écoulement lors de l'injection en direction de la colonne de séparation ou, dans un deuxième mode, est lavée en sens inverse avec un gaz porteur purifié dans un filtre (15).

14. Dispositif portable d'analyse de gaz selon l'une des revendications 11 à 13, **caractérisé en ce que** le dispositif portable d'analyse de gaz pourvu de son organe de mesure, notamment l'électronique de commande (58) d'un organe de stabilisation thermique (56), est réalisé en étant protégé contre les explosions et/ou avec une sécurité propre, et est conçu de manière à ce que des distances minimales entre les réseaux électriques soient respectées afin d'éviter un transfert d'énergie indésirable, en particulier en raison d'interférences ou d'arcs électriques, la puissance électrique des composants soit limitée afin d'éviter une température de surface trop élevée, et les composants critiques en termes de sécurité sont réalisés de manière redondante ou multiple afin d'éviter des pannes critiques ou des courts-circuits.

15. Dispositif portable d'analyse de gaz selon l'une des revendications 11 à 14, **caractérisé en ce que** l'organe de mesure comprenant la colonne de séparation et le détecteur est réalisé comme un ensemble distinct interchangeable.
